# EUROPEAN PATENT APPLICATION

(11) **EP 4 819 262 A1**
(43) Date of publication of application: **07.10.2026**
(21) Application number: 24898292.8
(22) Date of filing: 13.11.2024
(51) Int. Cl.: H01M 8/18

(54) **METHOD FOR REDUCING VANADIUM IONS AND METHOD FOR MANUFACTURING ELECTROLYTE FOR VANADIUM REDOX BATTERY USING SAME**

(30) Priority: 30.11.2023 KR 20230171773
(71) Applicant: LOTTE CHEMICAL CORPORATION, Seoul 05551 (KR); Korea Advanced Institute of Science and Technology, Daejeon 34141 (KR)
(72) Inventor: Lee, Jae Hyuk, Daejeon 34110 (KR); Choi, Chan Yong, Daejeon 34110 (KR); Bae, Su Yeon, Daejeon 34110 (KR); Choi, Eun Mi, Daejeon 34110 (KR); Kim, Dae Sik, Daejeon 34110 (KR); Kim, Hee Tak, Daejeon 34141 (KR); Seok, Kyung Hwa, Daejeon 34141 (KR)
(74) Representative: Germain Maureau
(86) International application number: PCT/KR2024/096519
(87) International publication number: WO 2025/116700

(57) **Abstract**

The present disclosure relates to a method for reducing vanadium ions and a method for preparing an electrolyte for a vanadium redox battery using the same, the method including: (A) introducing a first reducing agent into a first vanadium compound solution having a first oxidation state and reacting to prepare a second vanadium compound solution having a second oxidation state lower than the first oxidation state; and (B) introducing a second reducing agent and a catalyst into the second vanadium compound solution having the second oxidation state and reacting to prepare a third vanadium compound solution having a third oxidation state lower than the second oxidation state, in which the first oxidation state is 4.5 to 5, the second oxidation state is 4.1 to 4.4, and the third oxidation state is 3 or more and less than 4.

## Description

### [Technical Field]

The present disclosure relates to a method for reducing vanadium ions and a method for preparing an electrolyte for a vanadium redox battery using the same.

### [Background Art]

As conventional power generation systems, such as thermal power generation using fossil fuels that cause large amounts of greenhouse gas emissions and environmental pollution, and nuclear power generation having problems in facility stability and waste disposal, reveal various limitations, research on the development of more environmentally friendly and highly efficient energy and power supply systems using the same has significantly increased. In particular, energy storage technology enables renewable energy, which is greatly affected by external conditions, to be used more widely and diversely and improves the efficiency of power utilization. Accordingly, development in this technical field has been intensively conducted, and interest in and research and development of secondary batteries have significantly increased.

In response to such demands, development of redox batteries (VRB), which are industrially closest to the ESS market along with lithium-ion batteries, has been accelerated.

The redox battery refers to an oxidation/reduction battery capable of directly converting chemical energy of an active material into electrical energy, and is an energy storage system capable of storing renewable energy having high output variability depending on external environments, such as solar and wind power, and converting the same into high-quality power. Specifically, in the redox battery, an electrolyte including an active material causing an oxidation/reduction reaction circulates between an electrode and a storage tank, thereby charging and discharging proceed.

In addition, the type of redox battery varies depending on the active material used in the electrolyte, and vanadium redox batteries, zinc/bromine redox batteries, and the like are known. Among them, in the vanadium redox battery, the electrolyte accounts for the highest cost portion among battery components, and thus cost reduction of the electrolyte is essential for securing price competitiveness of the vanadium redox battery.

Meanwhile, in a currently used vanadium redox battery system, an electrolyte including vanadium having an oxidation state of 3.5 is applied to both a positive electrode and a negative electrode of a cell. Through a pre-charging process, the electrolyte at the positive electrode is converted from vanadium having an oxidation state of 3.5 to vanadium having an oxidation state of 4, and the electrolyte at the negative electrode is converted from vanadium having an oxidation state of 3.5 to vanadium having an oxidation state of 3.

In this pre-charging process, since the same current is applied to the positive electrode and the negative electrode, when a vanadium electrolyte having a volume ratio of vanadium having an oxidation state of 3 and vanadium having an oxidation state of 4 other than 1:1 is introduced, conversion is insufficient at one electrode and excessive conversion occurs at the other electrode. As a result, the oxidation state balance is broken, capacity non-uniformity occurs, and long-term performance is deteriorated. Accordingly, in the art, precisely, a vanadium electrolyte having an oxidation state of 3.5 is preferred.

In order to obtain the vanadium electrolyte having an oxidation state of 3.5, conventionally, a chemical reduction method or a battery driving method has been used. According to the chemical reduction method, a preparation time is short, but unreacted residues (such as transition metals or expensive reducing agents) remain in the prepared electrolyte. In the battery driving method, there are problems such as costs of battery operation, differences in reaction time depending on battery specifications, and precise control of a charging amount of the battery to achieve an accurate oxidation state.

Accordingly, in Patent Document 1 and Non-Patent Document 1, when preparing a vanadium electrolyte having an oxidation state of 3.5, a spontaneous oxidation reaction is induced (reaction temperature: 70 to 80°C) by using an auxiliary reducing agent (formic acid, HCOOH) in the presence of a platinum catalyst in a vanadium compound solution having an oxidation state of 4. As a result, generated electrons reduce from V⁴⁺ to V³⁺, and by using an optimal concentration of formic acid, an electrolyte having a V⁴⁺ : V³⁺ ratio of 50 : 50 (V^{3.5+}) is prepared. In this case, no additional external electrical device is required, and as a relatively inexpensive organic reducing agent, formic acid is used. In addition, the organic reducing agent is completely decomposed due to high reactivity of the platinum catalyst, and thus no residue remains in the electrolyte.

However, the conventional method involves a two-step process. Specifically, when reducing the vanadium compound solution having an oxidation state of 5 to the vanadium compound solution having an oxidation state of 4, oxalic acid is used, and thereafter, when reducing from the vanadium compound solution having an oxidation state of 4 to the vanadium compound solution having an oxidation state of 3.5, formic acid and a platinum catalyst are used.

Accordingly, in order to further simplify the two-step process, a one-step reduction method has recently been developed (Korean Patent No. 10-2408365). Specifically, under a noble metal catalyst such as platinum (Pt) or iridium (Ir), a vanadium solution having an oxidation state of 5 is directly reduced to a vanadium solution having an oxidation state of 3.5, thereby providing advantages such as process simplification and time reduction. However, in this case, there is a possibility that durability of the catalyst may be deteriorated. For example, since a standard reduction potential (1.0 V) of vanadium in an oxidation state of 5 is close to a standard reduction potential (1.2 V) of platinum, durability of the catalyst may be significantly reduced due to ionization of Pt particles.

Therefore, there is a need for a method for reducing vanadium ions and a method for preparing an electrolyte for a redox battery using the same, which can shorten the preparation time of the two-step process while preventing deterioration of durability of a platinum catalyst and enabling reuse thereof.

### [Prior Art Documents]

### [Patent Document]

(Patent Document 1) Korean Laid-Open Patent Application No. 10-2019-0102532

### [Non-Patent Document]

(Non-Patent Document 1) Nature Communications, volume 10, Article number: 4412 (2019), Jihyun Heo *et al*.

### [Disclosure]

### [Technical Problem]

The present disclosure provides a method for reducing vanadium ions, which enables reuse of a catalyst while shortening a preparation time, and a method for preparing an electrolyte for a vanadium redox battery using the same.

### [Technical Solution]

According to one embodiment of the present disclosure, there is provided a method for reducing vanadium ions, the method including:
(A) introducing a first reducing agent into a first vanadium compound solution having a first oxidation state and reacting to prepare a second vanadium compound solution having a second oxidation state lower than the first oxidation state; and
(B) introducing a second reducing agent and a catalyst into the second vanadium compound solution having the second oxidation state and reacting to prepare a third vanadium compound solution having a third oxidation state lower than the second oxidation state,
   in which the first oxidation state is 4.5 to 5, the second oxidation state is 4.1 to 4.4, and the third oxidation state is 3 or more and less than 4.

Moreover, according to another embodiment of the present disclosure, there is provided a method for preparing an electrolyte for a vanadium redox battery using the method for reducing vanadium ions.

### [Advantageous Effects]

The method for reducing vanadium ions and the method for preparing an electrolyte for a vanadium redox battery using the same according to the present disclosure include reducing vanadium ions to a specific oxidation state using a first reducing agent and then further reducing by introducing a second reducing agent and a catalyst, whereby durability of the catalyst may not be deteriorated.

In addition, sodium sulfite is used as the first reducing agent and the reduction process is performed only up to a specific oxidation state at which durability of the catalyst is not deteriorated. Therefore, a preparation time can be reduced and the amount of the sodium sulfite used as the reducing agent can be decreased as compared to a conventional two-step reduction method.

### [Description of Drawings]

FIG. 1 is a graph showing ICP analysis results of a Pt concentration in an electrolyte in a V⁵⁺ → V⁴⁺ reduction section using Na₂SO₃ as a reducing agent according to Experimental Example 1.
FIG. 2 is a graph showing ICP analysis results of a Pt concentration in an electrolyte in a V⁵⁺ → V⁴⁺ reduction section according to Experimental Example 1-1.
FIG. 3 is a graph showing ICP analysis results of a Pt concentration in an electrolyte in a V⁴⁺ → V³⁺ reduction section according to Experimental Example 1-1.
FIG. 4 is a photograph showing HR-TEM mapping analysis results of a Pt/C structure before and after a V⁵⁺ → V⁴⁺ → V^{3.5+} reaction according to Experimental Example 1-1.
FIG. 5 is a graph showing ICP analysis results of a Pt concentration for each vanadium oxidation state in an electrolyte in a V⁵⁺ → V⁴⁺ reduction section according to Experimental Example 2.
FIG. 6 is a graph showing ICP analysis results of a carbon oxidation degree after Pt/C impregnation in V⁵⁺ and V^{3.5+} electrolytes according to Experimental Example 3.
FIG. 7 is an image showing TEM analysis results of a catalyst structure before and after Pt/C impregnation in a V⁵⁺ electrolyte according to Experimental Example 3.
FIG. 8 is a graph showing durability evaluation results of Pt/C through repeated preparation of a V⁵⁺ → V^{3.5+} electrolyte.
FIG. 9 is a graph showing ICP analysis results according to a particle size of a Pt/C catalyst.
FIG. 10 is a graph showing UV-vis analysis results according to a particle size of a Pt/C catalyst.

### [Best Mode]

In the present specification, when a component is described as "including" another component, it does not exclude other components unless otherwise specified, but may further include additional components.

Hereinafter, the present disclosure will be described in detail.

According to one embodiment of the present disclosure, there is provided a method for reducing vanadium ions, the method including
(A) introducing a first reducing agent into a first vanadium compound solution having a first oxidation state and reacting to prepare a second vanadium compound solution having a second oxidation state lower than the first oxidation state, and
(B) introducing a second reducing agent and a catalyst into the second vanadium compound solution having the second oxidation state and reacting to prepare a third vanadium compound solution having a third oxidation state lower than the second oxidation state,
   in which the first oxidation state is 4.5 to 5, the second oxidation state is 4.1 to 4.4, and the third oxidation state is 3 or more and less than 4.

Here, the first oxidation state may be 4.5 to 5, the second oxidation state may be 4.2 to 4.4, and the third oxidation state may be 3 or more and less than 4.

The range of the oxidation state includes intermediate values between the stated oxidation states. For example, "4.5 to 5" may include not only 4.5 and 5 but also 4.6, 4.7, 4.8, and 4.9.

More specifically, the first oxidation state may be 5, the second oxidation state may be 4.4, and the third oxidation state may be 3.5, with an error range of ± 0.01.

According to studies conducted by the inventors of the present application, when vanadium is reduced using the first reducing agent until reaching a specific oxidation state and then further reduced under a catalyst, it is possible to shorten a reaction time while enabling repeated reuse of the catalyst.

Hereinafter, the preparation method will be described in detail.

First, in the step (A), the first vanadium compound solution may be prepared by mixing a vanadium precursor and an acidic solution. Here, the vanadium precursor may be one or more selected from the group consisting of V₂O₅, VOSO₄, NH₄VO₃, and V₂O₄.

The vanadium oxidation state of the first vanadium compound solution prepared from the vanadium precursor may be 4.5 to 5, and more specifically 5.

The acidic solution is preferably one or more selected from the group consisting of sulfuric acid, hydrochloric acid, nitric acid, and phosphoric acid, but is not limited thereto as long as it is a strong acid.

In the first vanadium compound solution, the vanadium concentration may be 0.5 M to 2.5 M, and a concentration of the acidic solution may be 0.1 M to 10 M. Since no additional components are introduced into the second vanadium compound solution and the third vanadium compound solution, these solutions also have concentrations within the above ranges.

Thereafter, the first reducing agent is introduced into the first vanadium compound solution and reacted to prepare the second vanadium compound solution having the second oxidation state lower than the first oxidation state.

The first reducing agent may be sodium sulfite (Na₂SO₃).

Conventionally, oxalic acid has mainly been used to reduce vanadium ions having an oxidation state of 5 to vanadium ions having an oxidation state of 4. However, in the case of oxalic acid, a reduction reaction proceeds at a high temperature of about 80°C or higher for 6 hours or more, making it difficult to shorten the process time.

In contrast, when sodium sulfite is used, sodium sulfite is introduced into the vanadium compound solution containing 1 M V₂O₅ in a 4 M sulfuric acid aqueous solution at a ratio of 1 M V₂O₅ to 1 M SO₂, and as a result of the reduction reaction, it is confirmed that vanadium having an oxidation state of 5 is converted to vanadium having an oxidation state of 4 within 30 minutes. Accordingly, when the first reducing agent according to the present disclosure is used, the process can be performed at least six times faster than when using conventional oxalic acid.

Meanwhile, according to the present disclosure, as described above, the reduction process of the step (A) using sodium sulfite is performed only until the oxidation state of vanadium reaches the second oxidation state, that is, 4.1 to 4.4, and thus the time may be further shortened to about 20 minutes to 25 minutes.

Accordingly, according to the present disclosure, a reaction time of the step (A) may be 20 minutes to 60 minutes.

In addition, when sodium sulfite is used as the first reducing agent, a reaction temperature of the reduction reaction may be 20°C to 80°C, more specifically 20°C to 60°C, and even more specifically 20°C to 30°C.

That is, when sodium sulfite is used, the reduction reaction readily proceeds even at room temperature, and thus it is not necessary to increase the reaction temperature. Accordingly, process efficiency may be further improved as compared to a case in which a reaction is performed at about 80°C or higher using oxalic acid.

The first reducing agent should be introduced in a concentration sufficient to reduce all vanadium ions in the first vanadium compound solution so as to have the second oxidation state, and more specifically may be introduced within a slightly excessive range. Accordingly, the first reducing agent may be introduced at a ratio of 1 to 1.5 times (M) relative to a vanadium concentration (M) of the first vanadium compound solution.

Meanwhile, the reason why the step (A) is performed until the second oxidation state, that is, 4.1 to 4.4, is to improve durability of the catalyst used in the reduction process of the step (B) so as to enable reuse thereof while reducing the amount of sodium sulfite used.

After preparing the second vanadium compound solution having the second oxidation state by sodium sulfite as described above, the second reducing agent and the catalyst are introduced and reacted to prepare the third vanadium compound solution.

At this time, the second reducing agent is preferably one or more selected from the group consisting of formic acid, formaldehyde, methanol, ethanol, oxalic acid, and ammonium hydroxide, but is not limited thereto as long as it does not leave impurities other than in a gaseous form.

The second reducing agent should also be introduced in a concentration sufficient to reduce all vanadium ions in the second vanadium compound solution so as to have the third oxidation state, and more specifically may be introduced within a slightly excessive range. Accordingly, the second reducing agent may be introduced at a ratio of 0.5 to 0.65 times (M) relative to a vanadium concentration (M) of the second vanadium compound solution. Through control of the introduction amount of the second reducing agent, a final electrolyte may be precisely controlled to have an oxidation state of V^{3.5+}.

In addition, the catalyst introduced together with the second reducing agent may be introduced in a state in which platinum is supported on one or more carriers selected from a group of various structures composed of carbon, and more specifically may be the Pt/C.

As described above, in the step (B), formic acid or the like is used as the second reducing agent, and a catalyst is required for reduction by the formic acid. However, as confirmed by the inventors of the present application, durability of the catalyst may be deteriorated depending on the oxidation state of vanadium. Considering that the catalyst mainly uses expensive noble metals, when durability is deteriorated and the number of reuse cycles is reduced, process cost efficiency is significantly lowered.

Accordingly, the inventors of the present application have evaluated durability exhibited during the reduction process for Pt/C used as the catalyst and intensively studied a method enabling repeated reuse of the catalyst. As a result, it has been confirmed that when the oxidation state of vanadium ions is reduced to 4.4 or less, deterioration of durability of the catalyst does not occur. Based on this, a timing of the step (B) in which the catalyst is used is established, which will be described below together with Experimental Examples.

### <Experimental Example 1>

In order to prepare a V⁵⁺ electrolyte having a concentration of 0.75 to 2.1 M, V₂O₅ was dispersed in a 4 M sulfuric acid aqueous solution, and then Na₂SO₃, as a reducing agent, was introduced in an amount such that SO₃²⁻ had a concentration of 0.75 to 2.1 M, followed by stirring at 25°C. After introduction of Na₂SO₃, samples were collected over time and subjected to ICP-AES (inductively coupled plasma atomic emission spectroscopy, Optima 8300) analysis. The ICP-AES analysis was performed according to a manual of the analysis instrument.

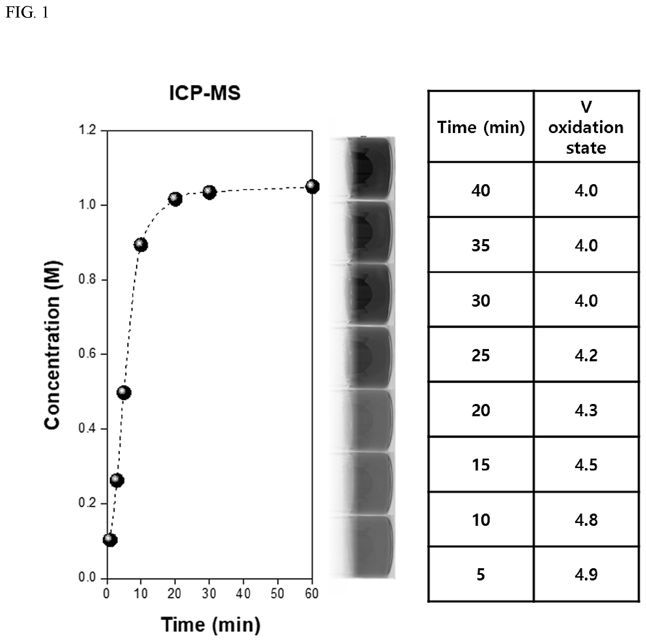

FIG. 1 is a graph showing ICP analysis results of a Pt concentration in the electrolyte in a V⁵⁺ → V⁴⁺ reduction section using Na₂SO₃ as a reducing agent according to Experimental Example 1. Specifically, it was confirmed that, after 10 minutes of reaction time following introduction of Na₂SO₃ at room temperature (25°C), V₂O₅ was reduced to V⁴⁺ and a concentration of V⁴⁺ increased. After 20 minutes of reaction, it was confirmed that 1 M V₂O₅ was completely reduced to 1 M V⁴⁺.

### <Experimental Example 1-1>

As described above, in a conventional one-step vanadium ion reduction method, there is a problem in that durability of a catalyst is significantly deteriorated. At this time, since the catalyst is affected by the oxidation state of vanadium, dissolution of Pt particles was evaluated under a reduction atmosphere from vanadium having an oxidation state of 5 to vanadium having an oxidation state of 4 in order to confirm a degree of Pt dissolution according to a change in the oxidation state of vanadium.

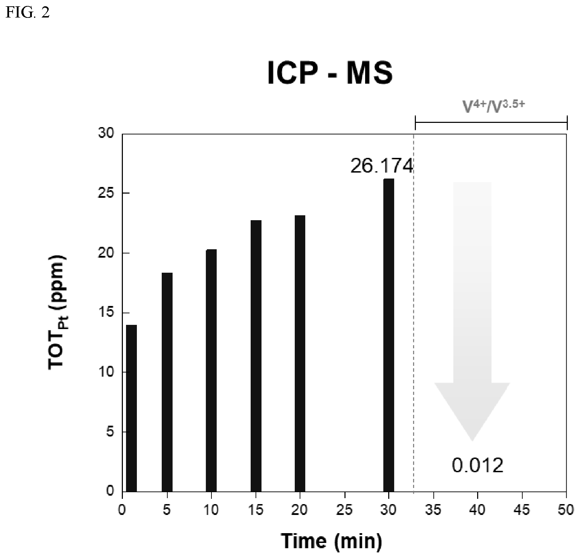

Specifically, in an experiment conducted under a reduction atmosphere from vanadium having an oxidation state of 5 to vanadium having an oxidation state of 4, 50 mg of Pt/C and 2.284 mL of formic acid were introduced into 50 mL of a 1.55 M V⁵⁺ electrolyte (based on a 2.2 M sulfuric acid aqueous solution), and a reduction reaction was carried out at 80°C. During each reduction process, electrolyte samples were collected over time in a section where the reduction reaction occurred, and a Pt concentration was confirmed by the ICP analysis, and results are shown in FIG. 2.

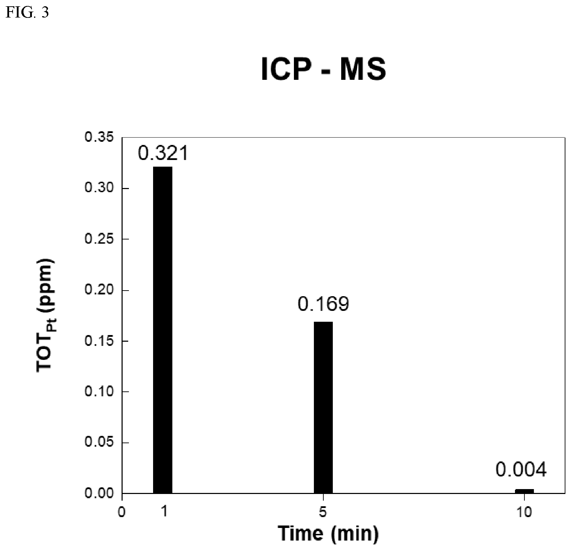

In addition, dissolution of Pt particles was confirmed under a reduction atmosphere from vanadium having an oxidation state of 4 to vanadium having an oxidation state of 3. Specifically, the reduction reaction was carried out in the same manner as the above experimental method, except that 50 mL of a 1.55 M V⁴⁺ electrolyte (based on a 2.2 M sulfuric acid aqueous solution) was used, the ICP analysis was performed accordingly, and the results are shown in FIG. 3.

Referring to FIGS. 2 and 3, by checking the Pt concentration in the electrolyte over time in the V⁵⁺ → V⁴⁺ reduction section, it was confirmed that the Pt concentration in the electrolyte increased as the reaction time progressed. However, upon entering the V⁴⁺ → V³⁺ reduction section, the Pt concentration in the electrolyte rapidly decreased. From this experiment, based on the fact that the Pt ionization potential is close to the theoretically known vanadium standard reduction potential, it can be seen that Pt ionization proceeds in the Pt/C catalyst in the section of reduction from V⁵⁺ to V⁴⁺.

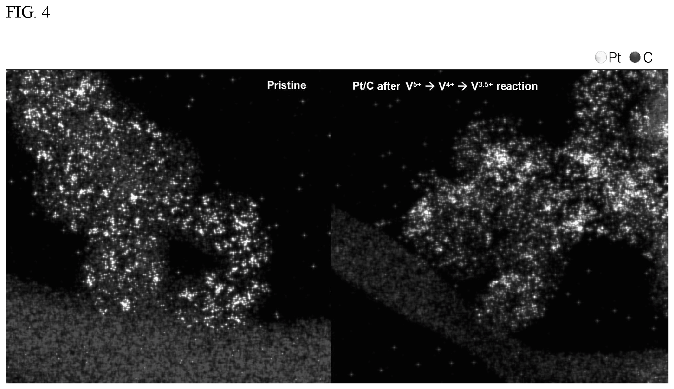

Additionally, HR-TEM images were taken before and after the reaction in a V⁵⁺ → V⁴⁺ → V³⁺ reduction section, and results are shown in FIG. 4 below.

Referring to FIG. 4, it was confirmed that Pt particles were agglomerated as they were redeposited after ionization. That is, as ionization of Pt occurs in V⁵⁺ → V⁴⁺, if the process transition to the V⁴⁺ → V³⁺ reduction section simultaneously, it exceeds the Pt ionization voltage range. Accordingly, ionized Pt is reduced again, resulting in partial re-deposition. Such loss and re-deposition of Pt particles lead to agglomeration between particles, resulting in deterioration of catalyst performance and a reduction in the number of reuse cycles.

### <Experimental Example 2>

As confirmed in Experimental Example 1, dissolution of Pt into the electrolyte occurs in the V⁵⁺ → V⁴⁺ reduction section. Accordingly, the following experiment was performed to determine a critical vanadium oxidation state at which dissolution of the catalyst occurs.

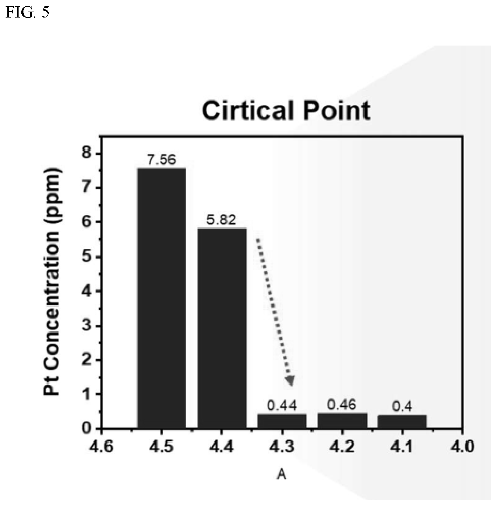

Specifically, while performing a reduction reaction at 80°C by introducing 50 mg of Pt/C and 2.284 mL of formic acid into 50 mL of a 1.55 M V⁵⁺ electrolyte (based on a 2.2 M sulfuric acid aqueous solution), samples were collected by checking the points of the vanadium oxidation states and then analyzed by the ICP during reduction from V⁵⁺ to V⁴⁺, and results are shown in FIG. 5.

Referring to FIG. 5, it was confirmed that, as the oxidation state of vanadium decreased from V⁵⁺ to V⁴⁺ while being reduced from V⁵⁺, ionization of Pt particles sharply increased. It was observed that Pt in the Pt/C catalyst was ionized and dissolved during reduction from V⁵⁺ to V^{4.4+}, and no Pt ionization occurred at an oxidation state of 4.4 or less. This indicates that durability of the Pt/C catalyst is ensured only when the oxidation state of vanadium is 4.4 or less. In other words, these evaluation results indicate that, in the conventional one-step process for preparing a vanadium electrolyte (V⁵⁺ → V^{3.5+}), durability of the expensive Pt/C is significantly reduced, resulting in deterioration of process efficiency.

### <Experimental Example 3>

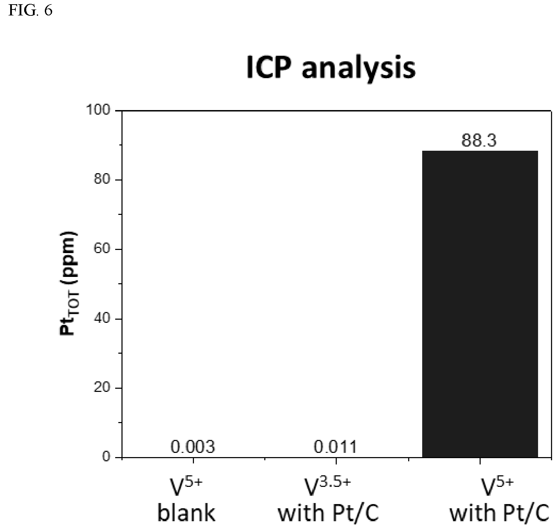

In addition, since the catalyst has a structure in which Pt is supported on a carbon support, durability of the carbon support is also important. Accordingly, in the present disclosure, in order to evaluate durability of the carbon support, the catalyst was recovered after the following experiments, and GC-MS and ICP analyses were performed. Results are shown in Table 1 and FIG. 6.

Sample 1: 15 mg of Pt/C was introduced into 15 mL of a 1.55 M V⁵⁺ electrolyte (based on a 2.2 M sulfuric acid aqueous solution), followed by impregnation at 80°C for 65 hours.

Sample 2: 15 mg of Pt/C was introduced into 15 mL of a 1.55 M V^{3.5+} electrolyte (based on a 2.2 M sulfuric acid aqueous solution), followed by impregnation at 80°C for 65 hours.

Sample 3: 15 mL of a 1.55 M V⁵⁺ electrolyte (based on a 2.2 M sulfuric acid aqueous solution) was maintained at 80°C for 65 hours without introducing Pt/C.

**[Table 1]**

| Sample | V⁵⁺ with Pt/C | V^{3.5+} with Pt/C | V⁵⁺ without Pt/C |
|---|---|---|---|
| CO₂ mol/mol (%) | 22 | 0.64 | 0.11 |

Referring to Table 1, based on GC analysis results, it was confirmed that carbon was oxidized during impregnation of Pt/C in the V⁵⁺ electrolyte for 65 hours. In contrast, oxidation of carbon was hardly observed in the V^{3.5+} electrolyte.

In addition, referring to FIG. 6 below, based on ICP analysis results, 88 ppm of Pt was detected in the V⁵⁺ electrolyte containing Pt/C, confirming that Pt was dissolved.

In contrast, almost no Pt was detected in the V^{3.5+} electrolyte. From these results, it can be seen that carbon is oxidized even when exposed to a V⁵⁺ electrolyte. Accordingly, in the V⁵⁺ electrolyte, collapse of a carbon support structure supporting Pt particles, detachment and agglomeration of Pt particles occur, thereby significantly affecting performance and durability of the Pt/C catalyst.

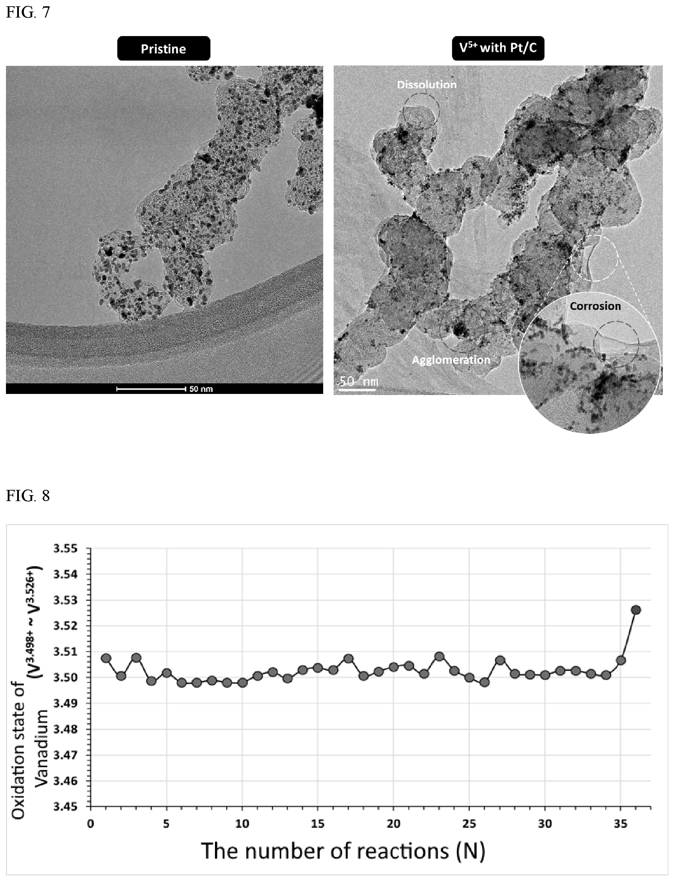

In addition, TEM analysis was performed before and after the reaction for Sample 1 to analyze a catalyst structure, and results are shown in FIG. 7.

Referring to FIG. 7, TEM analysis confirmed that the morphology of the catalyst was significantly changed from its original form. Specifically, detachment of Pt particles, partial agglomeration of Pt particles, and oxidation of carbon at edge regions were observed.

### <Experimental Example 4>

In order to evaluate practical durability of a Pt/C catalyst by simulating a one-step vanadium electrolyte preparation process, a continuous reuse test of Pt/C was conducted using a 1 L-volume filter reactor.

Specifically, based on preparation of 830 mL of a 1. 7M V^{3.5+} per cycle from V⁵⁺ → V^{3.5+}, a reduction reaction was carried out for 1 hour by introducing 0.83 g of Pt/C and 40.33 mL of formic acid. After completion of the reaction during 1 hour, the Pt/C catalyst and the V^{3.5+} electrolyte were separated through a filter at a lower portion of the reactor, and the Pt/C catalyst retained on the filter was repeatedly reused in a subsequent reaction. The results are shown in FIG. 8.

Referring to FIG. 8, as the results of durability evaluation of the Pt/C catalyst through repeated preparation of V⁵⁺ → V^{3.5+}, it was confirmed that complete reduction from V⁵⁺ to V^{3.5+} did not occur from the 36th cycle. After 36 cycles of vanadium electrolyte preparation, the oxidation state of vanadium was V^{3.526+}, indicating that catalytic activity of Pt/C was decreased. From this, it can be concluded that replacing the expensive Pt/C catalyst with a new one after using it only 35 times is significantly inefficient for process operation. This experiment yielded the results that once again confirmed the previously instability of the Pt/C catalyst during the V⁵⁺ → V⁴⁺ reduction reaction.

When Experimental Examples 1 to 4 are taken together, it can be seen that the conventional one-step process for preparing the V^{3.5+} electrolyte may appear to be efficient, but exhibits a problem in that durability of Pt/C, which is a key component, is significantly deteriorated.

Accordingly, in order to establish a process enabling theoretically permanent reuse of expensive Pt/C, it is preferable to employ a two-step preparation process in which the catalyst is used in the V⁴⁺ → V^{3.5+} preparation step, and the V⁵⁺ → V⁴⁺ reduction is performed using another reducing agent. However, in such a preparation process, considering that use of oxalic acid in the V⁵⁺ → V⁴⁺ reaction requires a high process temperature and a long process time, resulting in low efficiency, it is desirable to minimize a reaction time of the V⁵⁺ → V⁴⁺ reduction. Accordingly, as confirmed by the inventors of the present application, use of sodium sulfite as a reducing agent in this step can reduce the process time by about six times.

In addition, in order to shorten process time while reducing the amount of sodium sulfite used and securing durability of the catalyst to enable substantially permanent reuse, based on the finding that the catalyst is not substantially dissolved at an oxidation state of V^{4.4+} or less as derived in Experimental Example 2, the above effects can be achieved by performing a reduction reaction using sodium sulfite up to around an oxidation state of 4.4, and then performing reduction using a Pt/C catalyst at an oxidation state of 4.4 or less.

That is, according to the present disclosure, it can be seen that reduction of process time, reduction in the amount of sodium sulfite used, and resolution of deterioration of catalyst durability can be simultaneously achieved.

Meanwhile, platinum of the catalyst may be introduced in a particle form, and in the case, the platinum may have a particle size of 1 nm to 20 nm. Here, the particle size may refer to an average value obtained by selecting 100 particles identified in an HR-TEM image and directly measuring the same.

The size of the catalyst refers to an average size of particles constituting the catalyst. For example, when particles of a synthesized catalyst have a plurality of sizes, an average size of the particles may be defined as the size of the catalyst. In addition, the size of the catalyst may be measured by obtaining an image using high-resolution transmission electron microscopy (HR-TEM) and utilizing a function provided in an analysis instrument. Specifically, the size of the catalyst may be measured based on a scale bar shown in an image by measuring sizes of substantially spherical particles observed in the image of the high-resolution transmission electron microscopy. When a plurality of particle sizes is observed in the image of the high-resolution transmission electron microscopy, a plurality of spherical particles is selected, and a median value of particle sizes measured relative to a scale bar may be defined as the size of the catalyst.

When the particle size is outside the above range and is too small, preparation is difficult and a reaction area increases, thereby increasing a likelihood of dissolution. When the particle size is too large, although lifetime is not significantly affected, a reaction area decreases, resulting in an increase in reaction time, and an amount of Pt used increases, thereby increasing preparation costs and making preparation difficult, which is inefficient.

Accordingly, when the above range is satisfied, dissolution is not significantly affected by the particle size. In order to confirm this, Experimental Example 5 will be described below.

### <Experimental Example 5>

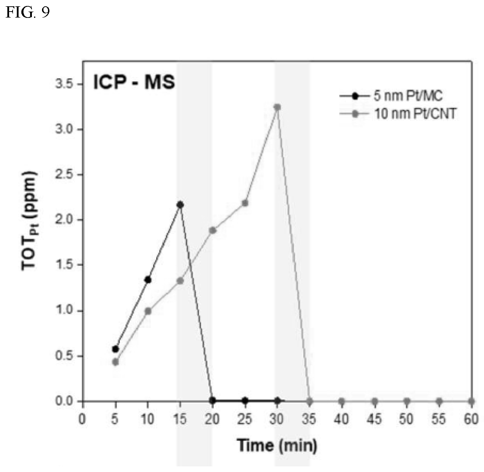

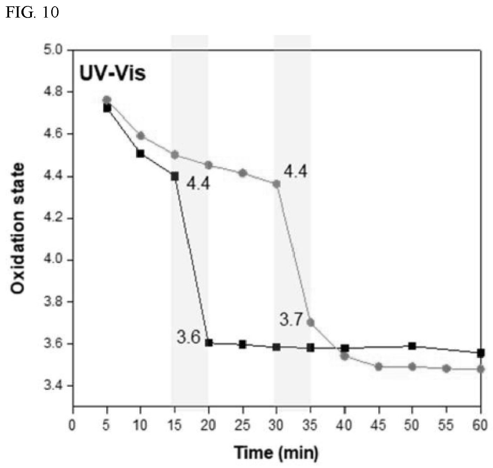

During a V⁵⁺ → V⁴⁺ reduction reaction, a degree of ionization of Pt particles was evaluated according to particle size. Specifically, 50 mg of Pt/C (particle size (D50): 5 nm and 10 nm) and 2.284 mL of formic acid were introduced into 50 mL of a 1.55 M V⁵⁺ electrolyte (based on a 2.2 M sulfuric acid aqueous solution), and a reduction reaction was carried out at 80°C. Samples were collected at 5-minute intervals, and the degree of Pt dissolution and the degree of vanadium reduction were checked through the ICP analysis and UV-vis analysis. Results are shown in FIGS. 9 and 10.

Referring to FIGS. 9 and 10, it was confirmed that an increase in particle size did not significantly affect Pt dissolution. Accordingly, within the above range, it is not necessary to increase the particle size of Pt.

In addition, the catalyst may be introduced in the amount of 0.001 g to 0.1 g based on 1 mL of the second vanadium compound solution, more specifically 0.002 g to 0.05 g, and even more specifically 0.0025 g to 0.006 g.

If included in too little outside the above range, an oxidation reaction of the second reducing agent may proceed slowly, and thus oxidation may not occur within a short time, resulting in a long preparation time of the third vanadium compound solution or insufficient reaction, which is undesirable since a target electrolyte may not be prepared.

The reaction of the step (B) using the catalyst may be performed at a reaction temperature of 60°C to 90°C, more specifically 60°C to 80°C.

When the reaction temperature is outside the above range, the reaction may not proceed sufficiently or may proceed slowly, and when the reaction temperature is excessively high, evaporation of a solvent or a reducing agent may cause a change in concentration, which is undesirable.

Meanwhile, according to the present disclosure, there is provided a method for preparing an electrolyte for a vanadium redox battery using the method for reducing vanadium ions.

The electrolyte for a vanadium redox battery may be prepared by preparing and using the V^{3.5+} vanadium compound solution using the method for reducing vanadium ions described above, and other details are known in the art.

## Claims

1. A method for reducing vanadium ions, the method comprising:
(A) introducing a first reducing agent into a first vanadium compound solution having a first oxidation state and reacting to prepare a second vanadium compound solution having a second oxidation state lower than the first oxidation state; and
(B) introducing a second reducing agent and a catalyst into the second vanadium compound solution having the second oxidation state and reacting to prepare a third vanadium compound solution having a third oxidation state lower than the second oxidation state,
wherein the first oxidation state is 4.5 to 5, the second oxidation state is 4.1 to 4.4, and the third oxidation state is 3 or more and less than 4.

2. The method of claim 1, wherein the first reducing agent is sodium sulfite (Na₂SO₃).

3. The method of claim 2, wherein the first oxidation state is 5, the second oxidation state is 4.4, and the third oxidation state is 3.5.

4. The method of claim 1, wherein a vanadium concentration of each of the first vanadium compound solution, the second vanadium compound solution, and the third vanadium compound solution is 0.5 M to 2.5 M.

5. The method of claim 1, wherein the first reducing agent is introduced at a ratio of 1 to 1.5 times (M) relative to a vanadium concentration (M) of the first vanadium compound solution.

6. The method of claim 1, wherein the second reducing agent is at least one selected from the group consisting of sodium sulfite, formic acid, formaldehyde, methanol, ethanol, oxalic acid, and ammonium hydroxide.

7. The method of claim 1, wherein the second reducing agent is introduced at a ratio of 0.5 to 0.65 times (M) relative to a vanadium concentration (M) of the second vanadium compound solution.

8. The method of claim 1, wherein the catalyst is introduced in a state in which platinum is supported on one or more carriers selected from a group of various structures composed of carbon.

9. The method of claim 8, wherein the platinum has a particle size of 1 nm to 20 nm.

10. The method of claim 1, wherein the catalyst is introduced in an amount of 0.001 g to 0.1 g based on 1 mL of the second vanadium compound solution.

11. The method of claim 1, wherein, in (A), a reaction temperature is 20°C to 80°C and a reaction time is 20 minutes to 60 minutes.

12. The method of claim 1, wherein, in (B), a reaction temperature is 60°C to 90°C and a reaction time is 5 minutes to 60 minutes.

13. A method for preparing an electrolyte for a vanadium redox battery using the method for reducing vanadium ions according to claim 1.
